# EUROPÄISCHE PATENTSCHRIFT

(11) **EP 1 518 733 B1**
(45) Veröffentlichungstag und Bekanntmachung des Hinweises auf die Patenterteilung: **10.09.2008**
(21) Anmeldenummer: 04022662.3
(22) Anmeldetag: 23.09.2004
(51) Int. Cl.: B60J 7/22

(54) **Fahrzeugdach mit einer Dachöffnung und einem Windabweiser**
Vehicle roof with roof opening and wind deflector
Toit de véhicule avec ouverture de toit et un déflecteur de vent

(30) Priorität: 26.09.2003 DE 10344884
(43) Veröffentlichungstag der Anmeldung: 30.03.2005
(73) Patentinhaber: Webasto AG, 82131 Stockdorf (DE)
(72) Erfinder: Karami, Jadi, 85521 Ottobrunn (DE); Kiedl, Martin, 80638 München (DE); Gallner, Christian, 83607 Holzkirchen (DE)

(56) Entgegenhaltungen:
- DE-A1- 3 913 567
- DE-A1- 10 146 285
- DE-A1- 19 714 492
- DE-A1- 19 958 742

## Beschreibung

Die vorliegende Erfindung betrifft ein Fahrzeugdach mit einer Dachöffnung und einem Windabweiser gemäß dem Oberbegriff von Anspruch 1.

Es sind gattungsgemäße Fahrzeugdächer bekannt, bei welchen der Windabweiser um eine in Dachquerrichtung verlaufende dachfeste Achse schwenkbar gelagert und in Richtung der voll ausgestellten Position federnd vorgespannt ist, wobei der Windabweiser beim Schließen des Schließelements bzw. des Deckels mittels des Deckelantriebs gegen die Vorspannkraft abgesenkt wird, und wobei der an dem Windabweiser angreifende Halter in den Zwischenpositionen als Niederhalter wirkt.

Ein solches gattungsgemäßes Fahrzeugdach ist beispielsweise in der DE 199 58 742 A1 beschrieben, wobei die Stellvorrichtung im Bereich der Vorderkante der Dachöffnung angeordnet ist und mit einer Hebelmechanik versehen ist, die zwei spiegelsymmetrische Stellwippen aufweist, deren eines Ende jeweils einen Anschlag für den Windabweiser bildet und deren anderes Ende an einem Steuerhebel angelenkt ist, der auf einer Abtriebswelle des Stellantriebs sitzt. Nachteilig bei dieser Lösung ist der verhältnismäßig große Einbauraum.

Aus der DE 101 42 047 A1 ist eine ähnliche Konstruktion bekannt, wobei der Anschlag für den Windabweiser durch einen Draht aus einer Formgedächtnislegierung bestimmt wird. In der FR 2 810 592 A1 ist ein Fahrzugdach beschrieben, bei welchem die Windabweiserstellung über einen an dem Windabweiser angreifenden Seilzug einstellbar ist. Aus der DE 101 46 285 A1 ist ein Fahrzeugdach bekannt, bei welchem der Anschlag für die Windabweiserausstellung über von dem Deckel betätigte seitliche Steuerhebel erfolgt. Ein ähnliches Fahrzeugdach ist auch in der DE 198 09 943 A1 beschrieben.

In der EP 0 931 683 A2 ist ein Kraftfahrzeugdach beschrieben, bei welchem die Verstellung des Windabweisers über einen Windabweiserstellmotor erfolgt, der über ein Antriebskabel ein mit dem Windabweiser verbundenes Ritzel antreibt.

In der DE 197 01 479 A1 ist ein Fahrzeugdach beschrieben, bei welchem der Windabweiser über eine von einem Stellmotor in Dachlängsrichtung verschiebbar angetriebene seitliche Steuerkurve verstellt wird, die als Kulissenband, beispielsweise in Form eines vertikal angeordneten Zahnriemens, ausgebildet ist.

In der DE 197 14 492 A1 ist ein Fahrzeugdach beschrieben, bei welchem der Windabweiser um eine an seinem vorderen Ende in Dachquerrichtung verlaufende Schwenkachse schwenkbar ist, wobei ein mit einer geneigten Kulissenbahn versehenes Kulissenelement fest mit dem Windabweiser verbunden ist und wobei ein zu einer Verschiebebewegung in der Dachquerrichtung angetriebener Kulissenstift mit der Kulissenbahn so in Eingriff steht, dass bei einer Verschiebebewegung des Kulissenstifts in der Dachquerrichtung ein Verschwenken des Kulissenelements und damit des Windabweisers erfolgt.

In der DE 102 10 617 A1 ist ein Fahrzeugdach beschrieben, bei welchem der Anschlag für die Ausstellbewegung des Windabweisers mittels eines Endes eines als Wippe ausgebildeten Steuerhebels verstellbar ist, dessen anders Ende von einem in Dachlängsrichtung verlaufenden Kulissenschlitz über einen separaten Motor gesteuert wird.

In der DE 39 13 567 A1 ist ein Fahrzeugdach beschrieben, bei welchem ein Windabweiser im Bereich seiner Oberkante mit Zusatzelementen versehen ist, die an dem Windabweiser so gelagert sind, dass sie bei Bedarf über die Oberkante des Windabweisers nach oben geschoben werden können, wobei dies dadurch erfolgt, dass ein von einem Antrieb in Dachquerrichtung angetriebener Kulissenstift jeweils in eine geneigte Kulissenbahn an dem jeweiligen Zusatzelement gleitend eingreift.

Die oben erwähnten Fahrzeugdächer weisen verschiedene Nachteile auf. Sie erlauben z.T. keine von Deckel unabhängige Betätigung des Windabweisers und die Stellvorrichtung des Windabweisers benötigt viel Bauraum oder gewährleistet keine zuverlässige Steuerung des Windabweisers oder benötigt relativ viele Bauteile.

Es ist Aufgabe der vorliegenden Erfindung, ein Fahrzeugdach mit einer Dachöffnung und einen Windabweiser zu schaffen, wobei eine möglichst flexible Einstellung von Zwischenpositionen des Windabweisers möglich sein soll, der Bauraumbedarf sowie die Zahl der benötigten Teile möglichst gering gehalten werden soll und ein robuster Aufbau ermöglicht werden soll.

Diese Aufgabe wird erfindungsgemäß gelöst durch ein Fahrzeugdach gemäß Anspruch 1 bzw. 27, wobei die Lösung gemäß Anspruch 27 eine kinematische Umkehr bezüglich der Lösung gemäß Anspruch 1 darstellt.

Bei der erfindungsgemäßen Lösung ist vorteilhaft, dass mittels der Stellvorrichtung auf einfache Weise die Position des Windabweisers, beispielsweise in Abhängigkeit von der Fahrtgeschwindigkeit und/oder dem Öffnungsgrad des Schließelements, variiert werden kann, um eine optimale Reduzierung von Wind- und Wummer-Geräuschen zu erzielen, wobei die Stellvorrichtung sehr kompakt mit geringem Bauraumbedarf gestaltet werden kann und dabei insbesondere in dem vorderen quer verlaufenden Teil eines Dachrahmens für das Schließelement integriert werden kann, wobei ferner die Zahl der zusätzlichen, für die Stellvorrichtung erforderlichen Teile sehr gering gehalten werden kann und wobei die Stellvorrichtung sehr robust und damit zuverlässig ausgebildet werden kann.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
Fig. 1 eine schematische perspektivische Ansicht eines erfindungsgemäßen Fahrzeugdaches, wobei lediglich der Windabweiser und der vordere Dachrahmenbereich, gesehen von schräg vorn, dargestellt sind,
Fig. 2 eine vergrößerte Ansicht eines Teilbereichs des Fahrzeugdaches von Fig. 1, wobei der Dachrahmen zum Teil frei geschnitten ist und der Windabweiser in einer abgesenkten Position dargestellt ist;
Fig. 3 eine schematische perspektivische Ansicht des Bereichs von Fig. 2, wobei dieser in Fig. 3 jedoch von schräg hinten gesehen ist und der Windabweiser zum Teil weggeschnitten ist;

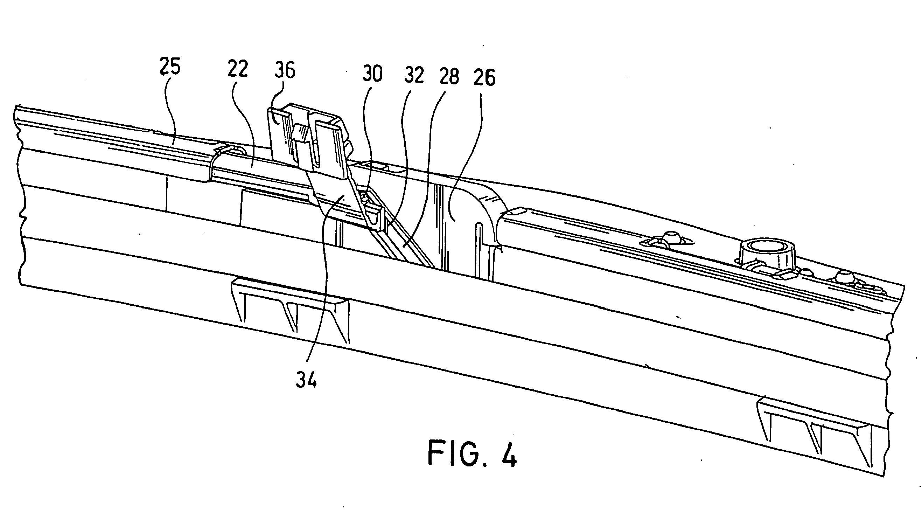

Fig. 4 eine Ansicht ähnlich zu Fig. 3, jedoch aus einer etwas anderen Perspektive, wobei die Stellvorrichtung für den Windabweiser in einer Position dargestellt ist, bei welcher der Windabweiser voll ausgestellt ist;
Fig. 5 eine Schnittdarstellung in Dachlängsrichtung im Bereich der Linie V-V von Fig. 2, wobei jedoch der Kulissenstift, im Gegensatz zu Fig. 2, in seiner oberen Stellung gezeigt ist;

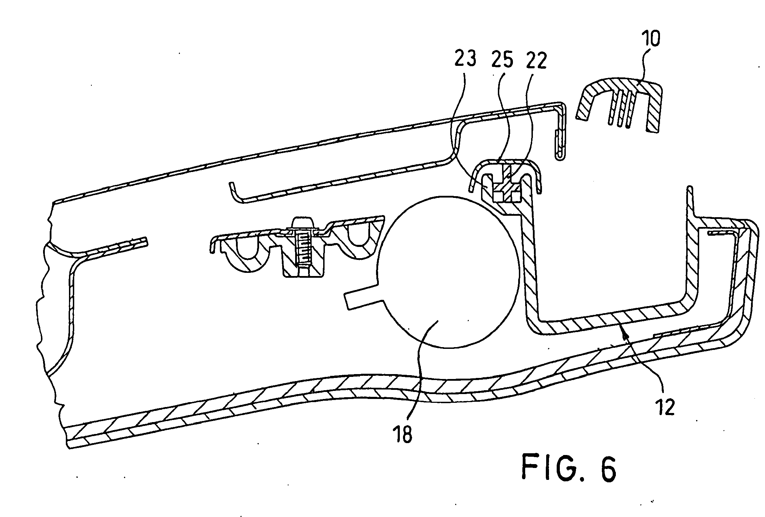

Fig. 6 eine Schnittdarstellung entlang der Linie VI-VI von Fig. 2; und
Fig. 7 eine Ansicht ähnlich zu Fig. 3, wobei ein Teil des Kulissenelements weggeschnitten ist und die Stellvorrichtung in einer Position dargestellt ist, in welcher der Windabweiser voll ausgestellt ist.

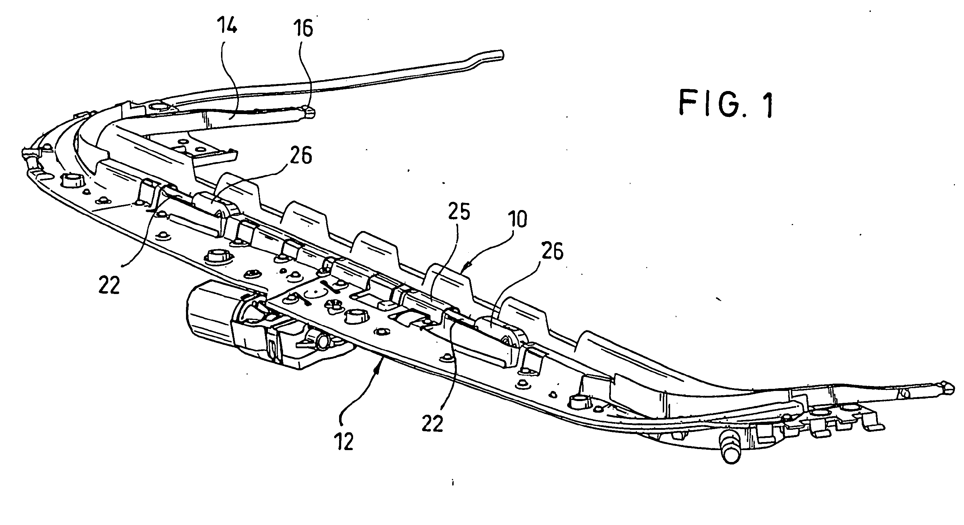

In Fig. 1 ist eine schematische perspektivische Ansicht, gesehen von schräg vorn, eines Windabweisers 10 und des vorderen, in Dachquerrichtung verlaufenden Teils eines Dachrahmens 12 für ein Fahrzeugdach gezeigt, wobei das Fahrzeugdach eine (nicht gezeigte) Dachöffnung aufweist, die von einem verstellbaren Schließelement (nicht gezeigt) wahlweise verschlossen oder mindestens teilweise frei gelegt werden kann. Der Windabweiser 10 und der gezeigte Teil des Dachrahmens 12 sind dabei im Bereich des vorderen Rands der Dachöffnung angeordnet, wobei der Dachrahmen als Lagerung für das Schließelement dient. Der Windabweiser erstreckt sich über die gesamte Breite der Dachöffnung.

Bei dem Schließelement kann es sich beispielsweise um den Deckel eines Schiebedaches, Schiebehebedaches, außengeführten Schiebedaches oder Spoilerdaches oder um die Lamellen eines Lamellendaches handeln.

Der Windabweiser 10 umfaßt eine vordere Windabweiserfläche und zwei seitliche Arme 14, die an ihrem hinteren Ende bei 16 um eine in Dachquerrichtung verlaufende feste Achse schwenkbar gelagert sind. Der Windabweiser 10 ist im Bereich der seitlichen Arme 14 in an sich bekannter Weise mittels eines Federelements in eine voll ausgestellte Position vorgespannt, in welcher die vordere Windabweiserfläche nach oben über die feste Dachfläche ausgestellt ist, um Windund Wummer-Geräusche, die im Fahrbetrieb bei geöffnetem Schließelement auftreten, zu eliminieren bzw. zu verringern. Beim Schließen des Schließelements wird der Windabweiser entgegen der Federvorspannung mit seiner vorderen Fläche nach unten in einen in dem Dachrahmen ausgebildeten Ablageraum gedrückt bzw. abgesenkt, wobei dies durch Betätigung der seitlichen Arme 14 beim Schließen des Schließelements erfolgt.

Die voll ausgestellte Position des Windabweisers 10 wird durch einen festen Anschlag (nicht gezeigt) vorgegeben. In der Regel ist es jedoch wünschenswert, unter bestimmten Umständen den Windabweiser 10 auch in Zwischenpositionen zwischen der abgesenkten und der voll ausgestellten Position einzustellen. So treten üblicherweise Wummergeräusche hauptsächlich in einem niedrigeren Geschwindigkeitsbereich (beispielsweise bis 100 km/h) auf, so dass in diesem Bereich in der Regel die voll ausgestellte Position des Windabweisers 10 wünschenswert ist, während bei höheren Geschwindigkeiten kaum Wummergeräusche auftreten, so dass es in diesem Geschwindigkeitsbereich nicht erforderlich ist, den Windabweiser voll auszustellen.

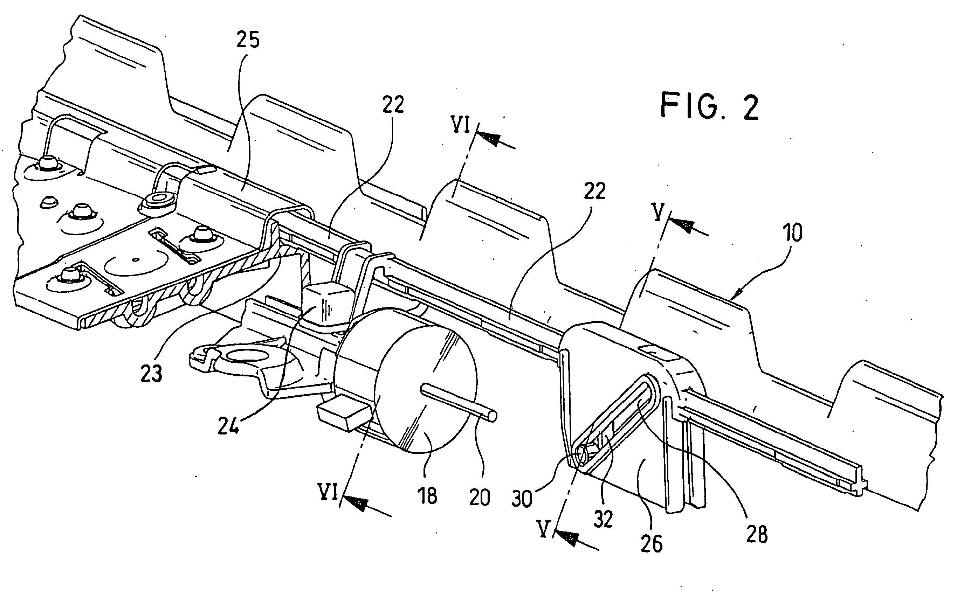

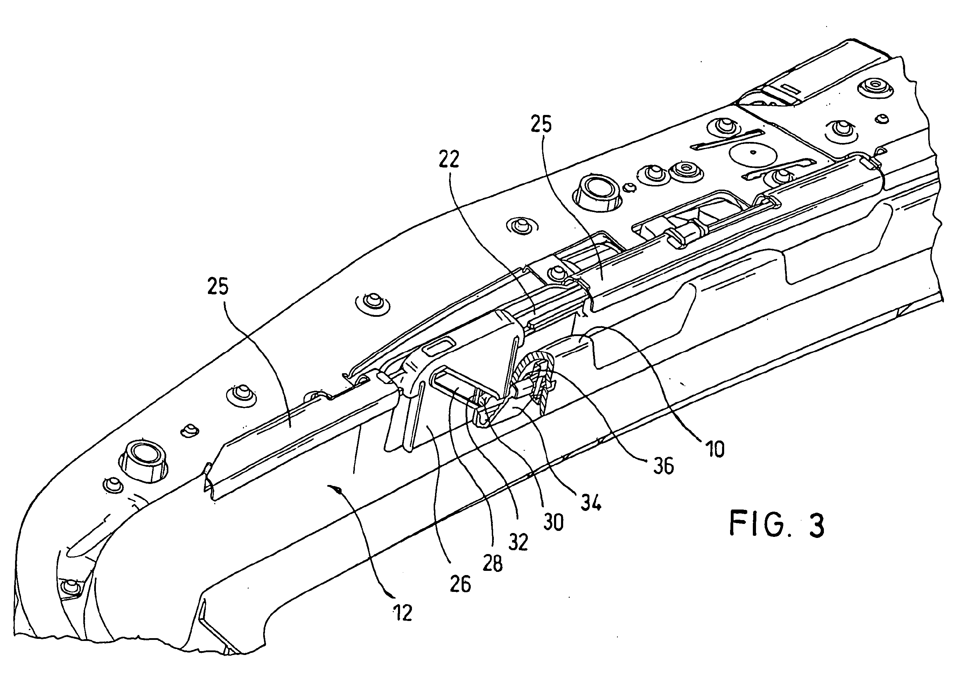

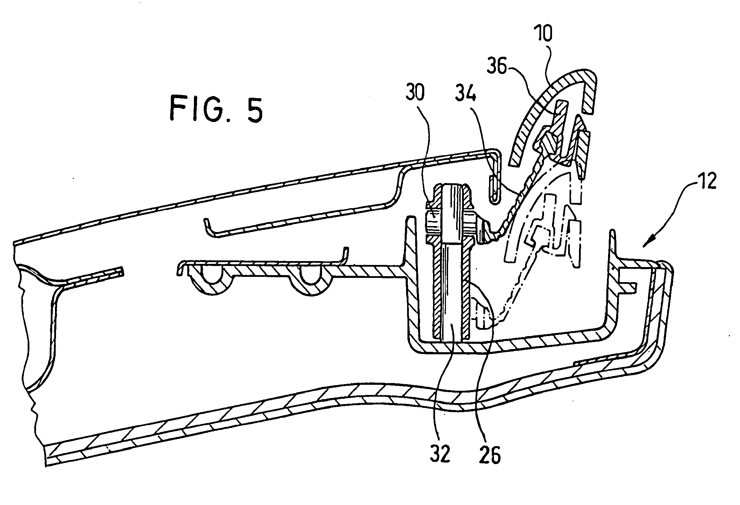

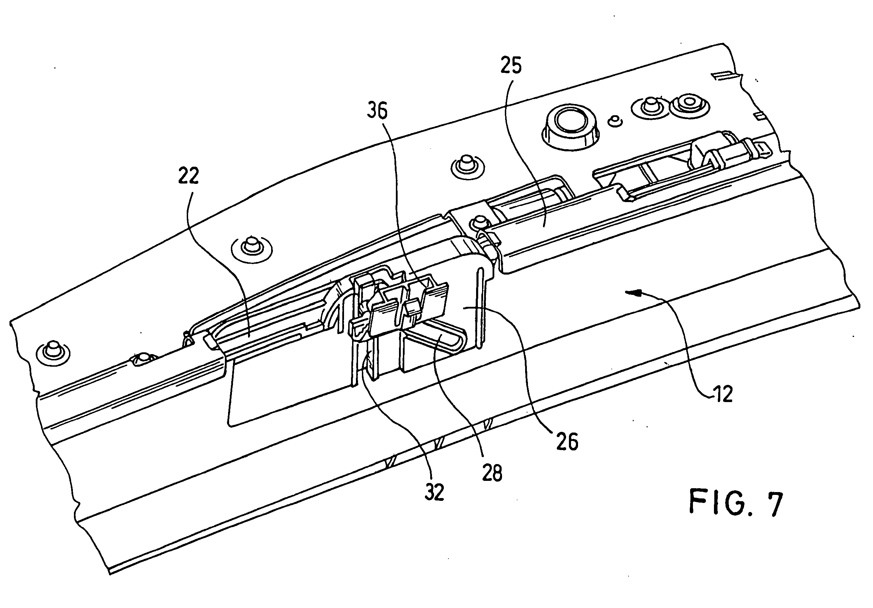

Zum Realisieren solcher Zwischenpositionen ist eine nachfolgend beschriebene Stellvorrichtung vorgesehen, welche einen Stellmotor 18, der beispielsweise als Rotationsmotor ausgebildet sein kann, der eine in Dachquerrichtung verstellbare Spindel 20 antreibt, und ein gestängeartig in Dachquerrichtung verlaufendes zugdrucksteifes Element 22, aufweist welches mittels einer Kupplungsanordnung 24 von der Spindel 20 zu einer Verschiebebewegung in Dachquerrichtung angetrieben ist und an einer Führungsschiene 23, die an dem Dachrahmen 12 ausgebildet und mit einer Abdeckung 25 versehen ist, in Dachquerrichtung verschiebbar geführt ist. Die Stellvorrichtung umfasst ferner ein als Kulissenelement 26 ausgebildetes Führungselement, welches einen Teil des zug-drucksteifen Elements 22 bildet oder mit diesem fest verbunden ist und einen geneigten Kulissenschlitz 28 aufweist, in welchen ein als Kulissenstift bzw. -bolzen 30 ausgebildetes Eingriffselement eingreift, siehe insbesondere Fig. 2. Der Kulissenstift 30 ist ferner in einer in der Dachhochrichtung, d. h. im wesentlichen senkrecht zu der Bewegungsrichtung des Kulissenelements 26 verlaufenden und in dem Dachrahmen 12 ausgebildeten Kulissenbahn 32 so geführt, dass er lediglich senkrecht zu der Bewegungsrichtung des Kulissenelements 26 (d.h. im gezeigten Beispiel nur in der Dachhochrichtung) verschiebbar ist, siehe Fign. 2, 3, 5 und 7. Der Kulissenstift 30 ist an seiner Rückseite mittels eines flexiblen Elements 34, das beispielsweise als Band ausgebildet sein kann, mit einem Niederhalter 36 verbunden, der in festem Eingriff mit dem Windabweiser 10 steht, siehe insbesondere Fig. 5.

Statt als Rotationsmotor mit nachgeschalteter Anordnung zum Umsetzen einer Drehbewegung in eine Linearbewegung ausgebildet zu sein, kann der Stellmotor auch als Linearmotor ausgebildet sein.

Im folgenden soll die Funktionsweise der Stellvorrichtung für den Windabweiser 10 näher erläutert werden. Falls beispielsweise ein Absenken des Windabweisers 10 ausgehend aus der voll ausgestellten Position bei geöffnetem Schließelement gewünscht wird, beispielsweise weil eine vorgegebene Geschwindigkeitsschwelle überschritten wird, wird der Stellmotor entsprechend zu einer Drehbewegung angesteuert, welche eine Verschiebung der Spindel 20 in der Dachquerrichtung bewirkt. Zusätzlich oder alternativ zu einer fahrtgeschwindigkeitsabhängigen Steuerung könnte die Steuerung des Stellmotors 18 beispielsweise auch in Abhängigkeit von dem Öffnungsgrad des Schließelements erfolgen. Über das Kupplungselement 24 wird die Verschiebebewegung der Spindel 20 in eine entsprechende Verschiebebewegung des zug-drucksteifen Elements 22 in der Dachquerrichtung umgesetzt, wobei auch das Kulissenelement 26 entsprechend in der Dachquerrichtung verschoben wird. Aufgrund des Eingriffs des Kulissenstifts 30 in die Kulissenbahn 28 und der Neigung der Kulissenbahn 28 (die im gezeigten Beispiel als gerade Bahn mit gleichmäßiger Steigung ausgebildet ist) erfolgt, je nach Drehrichtung des Motors 18, ein Absenken oder ein Anheben des Kulissenstifts 30, wobei sich dieser in der dachrahmenfesten Führungs- bzw. Kulissenbahn 32 nach unten bzw. nach oben bewegt. In Fig. 5 ist der Kulissenstift 30 in seiner oberen Position dargestellt, d.h. in der Position, in welcher der Windabweiser 10 voll ausgestellt ist, wobei zusätzlich der Niederhalter 36 mit dem flexiblen Band 34 auch in einer bezüglich der voll ausgestellten Position abgesenkten Position dargestellt ist.

Das flexible Element 34 sorgt für eine zugsteife, jedoch nicht für eine drucksteife Verbindung zwischen dem Kulissenstift 30 und dem Niederhalter 36. Wenn sich der Kulissenstift 30 aufgrund der Verschiebeewegung des Kulissenelements 26 in der dachrahmenfesten Führungsbahn 32 nach unten bewegt, wird entsprechend mittels der zugsteifen Koppelung über das flexible Element 34 auch der Niederhalter 36, und damit der Windabweiser 10, um eine entsprechende Strecke nach unten gezogen, wobei dabei die Federvorspannung des Windabweisers 10 überwunden wird. Auf diese Weise kann der Windabweiser 10 mittels des Stellmotors 18 ausgehend von der voll ausgestellten Position wahlweise in Zwischenpositionen abgesenkt werden. Es ist dabei jedoch nicht erforderlich, dass der Windabweiser mittels des Stellmotors 18 in die voll abgesenkte Position gebracht werden kann, da dies in der Regel ohnehin beim Schließen des Schließelements durch Betätigung der seitlichen Arme 14 erfolgt (in einem solchen Fall ist eine Flexibilität des Verbindungselements 34 erforderlich).

Gemäß Fig. 1 ist in symmetrischer Anordnung in der Nähe des seitlichen Rands jeweils auf beiden Seiten eines der Kulissenelemente 26 vorgesehen, die von dem Stellmotor 18 gemeinsam angetrieben werden, wodurch jeweils einer der Niederhalter 36 an in Dachquerrichtung beabstandeten Stellen angreift.

Vorzugsweise ist die gesamte Stellvorrichtung im Bereich des vorderen Teils des Dachrahmens 12 angeordnet und mindestens zum Teil in diesen integriert. Der Dachrahmen wirkt als karosseriefester Träger für die Stellvorrichtung.

Der Windabweiser 10 kann statt der in Fig. 1 gezeigten Ausführungsform mit zwei seitlichen Armen 14 alternativ als Windabweiserlamelle ausgebildet sein, welche um eine in Dachquerrichtung an oder nahe des vorderen Endes der Windabweiserlamelle verlaufenden Drehachse mit ihrer Hinterkante ausstellbar ist. In diesem Fall greifen die Niederhalter zweckmäßigerweise in der Nähe der Hinterkante der Windabweiserlamelle an dieser an, um diese in Zwischenpositionen abzusenken.

Ferner ist auch eine kinematische Umkehr der bisher beschriebenen Stellmechanik vorstellbar, wobei dann das in Dachquerrichtung verschiebbare Führungselement (im gezeigten Beispiel das Kulissenelement 26) nicht mit einer Kulissenbahn versehen ist, sondern als Eingriffselement, insbesondere als Kulissenstift, ausgebildet ist, während das in der Dachhochrichtung verschiebbare Element (im gezeigten Beispiel der Kulissenstift 30) mit einer geneigten Kulissenbahn bzw. Führungsbahn versehen ist, mit welcher das Eingriffselement verschiebbar in Eingriff steht.

Es versteht sich, dass die Führungsbahn nicht notwendigerweise als Kulissenschlitz ausgebildet sein muß, sondern auch in anderer Weise, beispielsweise als Führungssteg, ausgebildet sein kann, wobei auch das Eingriffselement entsprechend nicht notwendigerweise als Kulissenstift ausgebildet sein muss, sondern beispielsweise als den Führungssteg umgreifender Gleitschuh ausgebildet sein kann.

Ferner sei noch erwähnt, dass die gezeigte Stellmechanik nicht nur zum Absenken des Windabweisers, sondern auch zum Ausstellen desselben verwendet werden könnte, wobei in diesem Fall dann die Verbindung zwischen dem Eingriffselement und dem Niederhalter nicht nur zugsteif, sondern auch drucksteif ausgebildet sein müßte. In diesem Fall könnte dann die Stellmechanik grundsätzlich auch zum Erreichen der Endpositionen des Windabweisers verwendet werden.

### Bezugszeichenliste

- 10: Windabweiser
- 12: Dachrahmen
- 14: seitliche Arme von 10
- 16: Schwenkpunkte von 10
- 18: Motor
- 20: Spindel
- 22: zug-/drucksteifes Antriebselement für 26
- 23: Führungsschiene für 22
- 24: Kupplung
- 26: Kulissenelement
- 28: Kulissenschlitz
- 30: Kulissenstift
- 32: dachrahmenfeste Führung für 30
- 34: flexible Verbindung von 30 und 36
- 36: Niederhalter

## Patentansprüche

1. Fahrzeugdach mit einer Dachöffnung, einem Schließelement, das verstellbar ist, um die Dachöffnung wahlweise zu verschließen bzw. mindestens teilweise freizulegen, einem im Bereich des vorderen Rands der Dachöffnung angeordneten Windabweiser (10), der zwischen einer abgesenkten und einer voll ausgestellten Position verstellbar ist, sowie einer Stellvorrichtung (18, 20, 22, 26, 30) zum Einstellen von Zwischenpositionen des Windabweisers, die einen an dem Windabweiser angreifenden Halter (36) und eine von einem Antrieb (18, 20) angetriebene Verstellmechanik (22, 26, 30) aufweist, mittels deren der Halter zur Vorgabe von Zwischenpositionen des Windabweisers höhenverstellbar ist, **dadurch gekennzeichnet, dass** die Verstellmechanik ein von dem Antrieb zu einer Bewegung entlang des Windabweisers angetriebenes Führungselement (26) mit einer geneigten Führungsbahn (28) aufweist, entlang welcher ein mit dem Halter (36) verbundenes Eingriffselement (30) verschiebbar geführt ist, wobei das Eingriffselement an einem karosseriefesten Träger (12, 32) so gelagert ist, dass es bezüglich des Trägers lediglich senkrecht zu der Bewegungsrichtung des Führungselements verschiebbar ist.

2. Fahrzeugdach gemäß Anspruch 1, **dadurch gekennzeichnet, dass** die Führungsbahn als Kulissenbahn (28) ausgebildet ist.

3. Fahrzeugdach gemäß Anspruch 2, **dadurch gekennzeichnet, dass** die Kulissenbahn als Kulissenschlitz (28) ausgebildet ist und das Eingriffselement als in dem Kulissenschlitz geführter Kulissenstift (30) ausgebildet ist.

4. Fahrzeugdach gemäß Anspruch 2 oder 3, **dadurch gekennzeichnet, dass** das Eingriffselement (30) an dem karosseriefesten Träger (12) in einer in Dachhochrichtung verlaufenden Kulissenbahn verschiebbar geführt ist.

5. Fahrzeugdach gemäß einem der vorhergehenden Ansprüche, **dadurch gekennzeichnet, dass** das Führungselement (26) zu einer Bewegung in Dachquerrichtung entlang des Frontbereichs des Windabweisers (10) angetrieben ist.

6. Fahrzeugdach gemäß einem der vorhergehenden Ansprüche, **dadurch gekennzeichnet, dass** der Windabweiser (10) zu der voll ausgestellten Position hin vorgespannt ist.

7. Fahrzeugdach gemäß Anspruch 6, **dadurch gekennzeichnet, dass** der Windabweiser (10) durch das Schließen des Schließelements entgegen der Vorspannkraft abgesenkt wird.

8. Fahrzeugdach gemäß Anspruch 6 oder 7, **dadurch gekennzeichnet, dass** der Halter zur Vorgabe der Zwischenpositionen des Windabweisers (10) als Niederhalter (36) entgegen der Vorspannkraft wirkt.

9. Fahrzeugdach gemäß Anspruch 8, **dadurch gekennzeichnet, dass** der Halter (36) mittels eines flexiblen Elements (34) mit dem Eingriffselement (30) verbunden ist.

10. Fahrzeugdach gemäß Anspruch 9, **dadurch gekennzeichnet, dass** das flexible Element (34) als zugsteife, jedoch nicht drucksteife Verbindung, insbesondere als Band, ausgebildet ist.

11. Fahrzeugdach gemäß einem der vorhergehenden Ansprüche, **dadurch gekennzeichnet, dass** sich der Windabweiser (10) über die gesamte Breite der Dachöffnung erstreckt.

12. Fahrzeugdach gemäß einem der vorhergehenden Ansprüche, **dadurch gekennzeichnet, dass** der Windabweiser (10) um einer in Dachquerrichtung verlaufende, karosseriefeste Achse schwenkbar ist.

13. Fahrzeugdach gemäß Anspruch 12, **dadurch gekennzeichnet, dass** die Schwenkachse am hinteren Ende (16) des Windabweisers (10) liegt.

14. Fahrzeugdach gemäß einem der vorhergehenden Ansprüche, **dadurch gekennzeichnet, dass** das Führungselement (26) mittels eines zug-drucksteifen Elements (22), das entlang einer an dem karosseriefesten Träger (12) ausgebildeten Führung (23) geführt ist, mit dem Antrieb (18, 20)verbunden ist.

15. Fahrzeugdach gemäß Anspruch 14, **dadurch gekennzeichnet, dass** das Führungselement (26) einstückig mit dem zug-drucksteifen Element (22) ausgebildet ist.

16. Fahrzeugdach gemäß einem der vorhergehenden Ansprüche, **dadurch gekennzeichnet, dass** der Antrieb einen Stellmotor aufweist, der als Linearmotor oder als Rotationsmotor (18) mit nachgeschalteter Anordnung (20) zum Umsetzen einer Drehbewegung in eine Linearbewegung ausgebildet ist.

17. Fahrzeugdach gemäß Anspruch 16, **dadurch gekennzeichnet, dass** der Antrieb von einer von einem Rotationsmotor (18) angetriebenen Spindel (20) gebildet wird.

18. Fahrzeugdach gemäß Anspruch 17, **dadurch gekennzeichnet, dass** die Spindel (20) mittels eines Kupplungselements (24) mit dem zug-drucksteifen Element (22) verbunden ist.

19. Fahrzeugdach gemäß einem der vorhergehenden Ansprüche, **dadurch gekennzeichnet, dass** der Antrieb (18, 20) in Abhängigkeit von der Fahrtgeschwindigkeit und/oder von dem Öffnungsgrad des Schließelements angesteuert ist.

20. Fahrzeugdach gemäß einem der vorhergehenden Ansprüche, **dadurch gekennzeichnet, dass** mindestens zwei der Stellmechaniken (26, 30) und zwei der Halter (36) vorgesehen sind, wobei die Stellmechaniken von einem gemeinsamen Antrieb (18, 20) angetrieben sind.

21. Fahrzeugdach gemäß Anspruch 20, **dadurch gekennzeichnet, dass** die Halter (36) an in Dachquerrichtung beabstandeten Stellen, insbesondere jeweils im seitlichen Randbereich, des Windabweisers (10) angreifen.

22. Fahrzeugdach gemäß einem der vorhergehenden Ansprüche, **dadurch gekennzeichnet, dass** die gesamte Stellvorrichtung (18, 20, 22, 26, 30) im Bereich der vorderen Rand der Dachöffnung angeordnet ist.

23. Fahrzeugdach gemäß Anspruch 22, **dadurch gekennzeichnet, dass** es sich bei dem karosseriefesten Träger um den vorderen, in Dachquerrichtung verlaufenden Abschnitt eines unterhalb der Dachöffnung angeordneten Rahmens (12) handelt.

24. Fahrzeugdach gemäß Anspruch 23, **dadurch gekennzeichnet, dass** die Stellvorrichtung (20, 22, 26, 30) mindestens zum Teil in den karosseriefesten Träger integriert ist.

25. Fahrzeugdach gemäß einem der vorhergehenden Ansprüche, **dadurch gekennzeichnet, dass** das Schließelement als Deckel, insbesondere eines Schiebedaches, Schiebehebedaches, außengeführten Schiebedaches oder Spoilerdaches, oder als Lamellendach ausgebildet ist.

26. Fahrzeugdach gemäß Anspruch 12, **dadurch gekennzeichnet, dass** der Windabweiser als Windabweiserlamelle ausgebildet ist, die mit ihrer Hinterkante ausstellbar ist.

27. Fahrzeugdach mit einer Dachöffnung, einem Schließelement, das verstellbar ist, um die Dachöffnung wahlweise zu verschließen bzw. mindestens teilweise freizulegen, einem im Bereich des vorderen Rands der Dachöffnung angeordneten Windabweiser (10), der zwischen einer abgesenkten und einer voll ausgestellten Position verstellbar ist, sowie einer Stellvorrichtung (18, 20, 22, 26, 30) zum Einstellen von Zwischenpositionen des Windabweisers, die einen an dem Windabweiser angreifenden Halter (36) und eine von einem Antrieb (18, 20) angetriebene Verstellmechanik (22, 26, 30) aufweist, mittels deren der Halter zur Vorgabe von Zwischenpositionen des Windabweisers höhenverstellbar ist, **dadurch gekennzeichnet, dass** die Verstellmechanik ein von dem Antrieb zu einer Bewegung entlang des Windabweisers angetriebenes Eingriffselement aufweist, welches mit einer geneigten Führungsbahn eines mit dem Halter fest verbundenen Führungselements verschiebbar in Eingriff ist, wobei das Führungselement an einem karosseriefesten Träger so gelagert ist, dass es bezüglich des Trägers lediglich senkrecht zu der Bewegungsrichtung des Eingriffselements verschiebbar ist.

## Claims

1. Vehicle roof with a roof opening, a closing element which can be displaced in order to optionally close or at least partially open up the roof opening, a wind deflector (10) which is arranged in the region of the front edge of the roof opening and can be displaced between a lowered and a completely deployed position, and with an adjusting device (18, 20, 22, 26, 30) for setting intermediate positions of the wind deflector, said adjusting device having a holder (36) which acts on the wind deflector and an adjustment mechanism (22, 26, 30) which is driven by a drive (18, 20) and by means of which the holder can be displaced vertically to provide intermediate positions of the wind deflector, **characterized in that** the adjustment mechanism has a guide element (26) which is driven by the drive so as to move along the wind deflector and has an inclined guide track (28) along which an engagement element (30) which is connected to the holder (36), is displaceably guided, wherein the engagement element is mounted in such a manner on a support (12, 32) mounted on the vehicle body that it can be displaced with respect to the support only perpendicularly to the direction of movement of the guide element.

2. Vehicle roof according to Claim 1, **characterized in that** the guide track is designed as a slideway (28).

3. Vehicle roof according to Claim 2, **characterized in that** the slideway is designed as a sliding slot (28) and the engagement element is designed as a sliding pin (30) which is guided in the sliding slot.

4. Vehicle roof according to Claim 2 or 3, **characterized in that** the engagement element (30) is guided displaceably on the support (12) mounted on the vehicle body, in a slideway running in the vertical direction of the roof.

5. Vehicle roof according to one of the preceding claims, **characterized in that** the guide element (26) is driven so as to move along the front region of the wind deflector (10) in the transverse direction of the roof.

6. Vehicle roof according to one of the preceding claims, **characterized in that** the wind deflector (10) is prestressed towards the fully deployed position.

7. Vehicle roof according to Claim 6, **characterized in that** the wind deflector (10) is lowered counter to the prestressing force by closing of the closing element.

8. Vehicle roof according to Claim 6 or 7, **characterized in that** the holder for providing the intermediate positions of the wind deflector (10) acts counter to the prestressing force as a holding-down device (36).

9. Vehicle roof according to Claim 8, **characterized in that** the holder (36) is connected to the engagement element (30) by means of a flexible element (34).

10. Vehicle roof according to Claim 9, **characterized in that** the flexible element (34) is designed as a tension-resistant, but not compression-resistant, connection, in particular as a strap.

11. Vehicle roof according to one of the preceding claims, **characterized in that** the wind deflector (10) extends over the entire width of the roof opening.

12. Vehicle roof according to one of the preceding claims, **characterized in that** the wind deflector (10) can be pivoted about an axis which runs in the transverse direction of the roof and is mounted on the vehicle body.

13. Vehicle roof according to Claim 12, **characterized in that** the pivot axis lies at the rear end (16) of the wind deflector (10).

14. Vehicle roof according to one of the preceding claims, **characterized in that** the guide element (26) is connected to the drive (18, 20) by means of a tension-and compression-resistant element (22) which is guided along a guide (23) formed on the support (12) mounted on the vehicle body.

15. Vehicle roof according to Claim 14, **characterized in that** the guide element (26) is formed integrally with the tension- and compression-resistant element (22).

16. Vehicle roof according to one of the preceding claims, **characterized in that** the drive has a servomotor which is designed as a linear motor or as a rotation motor (18) with an arrangement (20) connected downstream for the conversion of a rotational movement into a linear movement.

17. Vehicle roof according to Claim 16, **characterized in that** the drive is formed by a spindle (20) driven by a rotation motor (18).

18. Vehicle roof according to Claim 17, **characterized in that** the spindle (20) is connected to the tension-and compression-resistant element (22) by means of a coupling element (24).

19. Vehicle roof according to one of the preceding claims, **characterized in that** the drive (18, 20) is activated as a function of the travel speed and/or the degree of opening of the closing element.

20. Vehicle roof according to one of the preceding claims, **characterized in that** at least two of the adjustment mechanisms (26, 30) and two of the holders (36) are provided, with the adjustment mechanisms being driven by a common drive (18, 20).

21. Vehicle roof according to Claim 20, **characterized in that** the holders (36) act on points of the wind deflector (10) that are spaced apart in the transverse direction of the roof, in particular in each case in the lateral edge region.

22. Vehicle roof according to one of the preceding claims, **characterized in that** the entire adjusting device (18, 20, 22, 26, 30) is arranged in the region of the front edge of the roof opening.

23. Vehicle roof according to Claim 22, **characterized in that** the support mounted on the vehicle body is the front section, which runs in the transverse direction of the roof, of a frame (12) arranged below the roof opening.

24. Vehicle roof according to Claim 23, **characterized in that** the adjusting device (20, 22, 26, 30) is at least partially integrated in the support mounted on the vehicle body.

25. Vehicle roof according to one of the preceding claims, **characterized in that** the closing element is designed as a cover, in particular of a sliding roof, tilt-and-slide roof, externally guided sliding roof or spoiler roof, or as a lamellar roof.

26. Vehicle roof according to Claim 12, **characterized in that** the wind deflector is designed as a wind deflector slat which can be deployed at its rear edge.

27. Vehicle roof with a roof opening, a closing element which can be displaced in order to optionally close or at least partially open up the roof opening, a wind deflector (10) which is arranged in the region of the front edge of the roof opening and can be displaced between a lowered and a completely deployed position, and with an adjusting device (18, 20, 22, 26, 30) for setting intermediate positions of the wind deflector, said adjusting device having a holder (36) which acts on the wind deflector and an adjustment mechanism (22, 26, 30) which is driven by a drive (18, 20) and by means of which the holder can be displaced vertically to provide intermediate positions of the wind deflector, **characterized in that** the adjustment mechanism has an engagement element which is driven by the drive so as to move along the wind deflector and is in engagement in a displaceable manner with an inclined guide track of a guide element connected fixedly to the holder, the guide element being mounted in such a manner on a support mounted on the vehicle body that it can be displaced with respect to the support only perpendicularly to the direction of movement of the engagement element.

## Revendications

1. Toit de véhicule avec une ouverture de toit, un élément de fermeture déplaçable pour fermer ou au moins ouvrir en partie l'ouverture de toit, un déflecteur de vent (10) disposé dans la région du bord avant de l'ouverture de toit, qui peut être déplacé entre une position rentrée et une position complètement sortie, ainsi qu'un dispositif de commande (18, 20, 22, 26, 30) pour ajuster des positions intermédiaires du déflecteur de vent, lequel présente un dispositif de fixation (36) venant en prise sur le déflecteur de vent et un mécanisme de déplacement (22, 26, 30) entraîné par un entraînement (18, 20), au moyen duquel le dispositif de fixation peut être déplacé en hauteur pour prédéfinir des positions intermédiaires du déflecteur de vent, **caractérisé en ce que** le mécanisme de déplacement présente un élément de guidage (26) entraîné par l'entraînement de manière à se déplacer le long du déflecteur de vent, avec une piste de guidage inclinée (28), le long de laquelle un élément d'engagement (30) connecté au dispositif de fixation (36) est guidé de manière déplaçable, l'élément d'engagement étant monté sur un support (12, 32) fixé à la carrosserie de telle sorte qu'il puisse être déplacé par rapport au support seulement perpendiculairement à la direction de déplacement de l'élément de guidage.

2. Toit de véhicule selon la revendication 1, **caractérisé en ce que** la piste de guidage est réalisée sous forme de piste à coulisse (28).

3. Toit de véhicule selon la revendication 2, **caractérisé en ce que** la piste à coulisse est réalisée sous forme de fente à coulisse (28) et l'élément d'engagement est réalisé sous la forme d'une broche à coulisse (30) guidée dans la fente à coulisse.

4. Toit de véhicule selon la revendication 2 ou 3, **caractérisé en ce que** l'élément d'engagement (30) est guidé sur le support (12) fixé à la carrosserie de manière déplaçable dans une piste à coulisse s'étendant dans la direction montante du toit.

5. Toit de véhicule selon l'une quelconque des revendications précédentes, **caractérisé en ce que** l'élément de guidage (26) est entraîné de manière à se déplacer dans la direction transversale du toit le long de la région avant du déflecteur de vent (10).

6. Toit de véhicule selon l'une quelconque des revendications précédentes, **caractérisé en ce que** le déflecteur de vent (10) est précontraint vers la position complètement sortie.

7. Toit de véhicule selon la revendication 6, **caractérisé en ce que** le déflecteur de vent (10) est abaissé par la fermeture de l'élément de fermeture à l'encontre de la force de précontrainte.

8. Toit de véhicule selon la revendication 6 ou 7, **caractérisé en ce que** le dispositif de fixation agit à l'encontre de la force de précontrainte pour prédéfinir les positions intermédiaires du déflecteur de vent (10) en tant que dispositif de retenue (36).

9. Toit de véhicule selon la revendication 8, **caractérisé en ce que** le dispositif de fixation (36) est connecté à l'élément d'engagement (30) au moyen d'un élément flexible (34).

10. Toit de véhicule selon la revendication 9, **caractérisé en ce que** l'élément flexible (34) est réalisé sous forme de connexion rigide en traction, mais pas en pression, notamment sous forme de bande.

11. Toit de véhicule selon l'une quelconque des revendications précédentes, **caractérisé en ce que** le déflecteur de vent (10) s'étend sur toute la largeur de l'ouverture du toit.

12. Toit de véhicule selon l'une quelconque des revendications précédentes, **caractérisé en ce que** le déflecteur de vent (10) peut pivoter autour d'un axe fixé à la carrosserie et s'étendant dans la direction transversale du toit.

13. Toit de véhicule selon la revendication 12, **caractérisé en ce que** l'axe de pivotement se situe à l'extrémité arrière (16) du déflecteur de vent (10).

14. Toit de véhicule selon l'une quelconque des revendications précédentes, **caractérisé en ce que** l'élément de guidage (26) est connecté à l'entraînement (18, 20) au moyen d'un élément rigide en traction et en pression (22), qui est guidé le long d'un guide (23) réalisé sur le support (12) fixé à la carrosserie.

15. Toit de véhicule selon la revendication 14, **caractérisé en ce que** l'élément de guidage (26) est réalisé d'une seule pièce avec l'élément rigide en traction et en pression (22).

16. Toit de véhicule selon l'une quelconque des revendications précédentes, **caractérisé en ce que** l'entraînement présente un moteur de commande qui est réalisé sous forme de moteur linéaire ou de moteur rotatif (18) avec un agencement (20) monté en aval, pour convertir un mouvement de rotation en un mouvement linéaire.

17. Toit de véhicule selon la revendication 16, **caractérisé en ce que** l'entraînement est formé par une broche (20) entraînée par un moteur rotatif (18).

18. Toit de véhicule selon la revendication 17, **caractérisé en ce que** la broche (20) est connectée au moyen d'un élément d'accouplement (24) à l'élément rigide en traction et en pression (22).

19. Toit de véhicule selon l'une quelconque des revendications précédentes, **caractérisé en ce que** l'entraînement (18, 20) est commandé en fonction de la vitesse de conduite et/ou du degré d'ouverture de l'élément de fermeture.

20. Toit de véhicule selon l'une quelconque des revendications précédentes, **caractérisé en ce qu'**au moins deux des mécanismes de commande (26, 30) et deux des dispositifs de fixation (36) sont prévus, les mécanismes de commande étant entraînés par un entraînement commun (18, 20).

21. Toit de véhicule selon la revendication 20, **caractérisé en ce que** les dispositifs de fixation (36) viennent en prise dans des emplacements espacés dans la direction transversale du toit, en particulier à chaque fois dans la région de bord latérale du déflecteur de vent (10).

22. Toit de véhicule selon l'une quelconque des revendications précédentes, **caractérisé en ce que** le dispositif de commande (18, 20, 22, 26, 30) en entier est disposé dans la région du bord avant de l'ouverture de toit.

23. Toit de véhicule selon la revendication 22, **caractérisé en ce que** le support fixé à la carrosserie est la portion avant s'étendant dans la direction transversale du toit, d'un cadre (12) disposé sous l'ouverture du toit.

24. Toit de véhicule selon la revendication 23, **caractérisé en ce que** le dispositif de commande (20, 22, 26, 30) est intégré au moins en partie dans le support fixé à la carrosserie.

25. Toit de véhicule selon l'une quelconque des revendications précédentes, **caractérisé en ce que** l'élément de fermeture est réalisé sous forme de couvercle, notamment d'un toit coulissant, d'un toit ouvrant coulissant et relevable, d'un toit ouvrant coulissant guidé à l'extérieur ou d'un toit à spoiler, ou sous forme de toit ouvrant à lamelles.

26. Toit de véhicule selon la revendication 12, **caractérisé en ce que** le déflecteur de vent est réalisé sous forme de lamelle de déflecteur de vent, qui peut être sortie avec son arête arrière.

27. Toit de véhicule comprenant une ouverture de toit, un élément de fermeture, qui est déplaçable, pour fermer ou au moins ouvrir en partie l'ouverture de toit, un déflecteur de vent (10) disposé dans la région du bord avant de l'ouverture de toit, qui peut être déplacé entre une position rentrée et une position complètement sortie, ainsi qu'un dispositif de commande (18, 20, 22, 26, 30) pour ajuster des positions intermédiaires du déflecteur de vent, qui présente un dispositif de fixation (36) venant en prise avec le déflecteur de vent et un mécanisme de déplacement (22, 26, 30) entraîné par un entraînement (18, 20), au moyen duquel le dispositif de fixation peut être déplacé en hauteur pour prédéfinir des positions intermédiaires du déflecteur de vent, **caractérisé en ce que** le mécanisme de déplacement présente un élément d'engagement entraîné par l'entraînement de manière à se déplacer le long du déflecteur de vent, lequel est en prise déplaçable avec une piste de guidage inclinée d'un élément de guidage connecté fixement au dispositif de fixation, l'élément de guidage étant monté sur un support fixé à la carrosserie de telle sorte qu'il puisse être déplacé par rapport au support uniquement perpendiculairement à la direction de déplacement de l'élément d'engagement.
